(19) Europäisches Patentamt
European Patent Office
Office européen des brevets

(11) **EP 1 959 326 A1**

(12) **EUROPEAN PATENT APPLICATION**
published in accordance with Art. 158(3) EPC

(43) Date of publication:
**20.08.2008 Bulletin 2008/34**

(51) Int Cl.:
***G05D 16/06*** (2006.01)

(21) Application number: **06833707.0**

(22) Date of filing: **30.11.2006**

(86) International application number:
**PCT/JP2006/323904**

(87) International publication number:
**WO 2007/066562 (14.06.2007 Gazette 2007/24)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.12.2005 JP 2005350947**

(71) Applicant: **Time Engineering Co., Ltd.
Niwa-gun, Aichi 480-0125 (JP)**

(72) Inventors:
• **HISHIKAWA, Minoru
Niwa-gun, Aichi 480-0125 (JP)**
• **YAMAGUCHI, Osamu
Niwa-gun, Aichi 480-0125 (JP)**

(74) Representative: **Weise, Wolfgang
Postfach 22 16 34
80506 München (DE)**

(54) **GOVERNOR DEVICE**

(57)     An opening amount of a port is kept constant with respect to temperature variation.

A governor apparatus 1 in the invention is **characterized by** comprising a tubular portion 49 whose both ends are in an axial direction open, a valve seat formed at an opening edge of a control port 52 opening at one end side of the cylindrical portion 49, a valve disc 18 which is capable of closing the valve seat as well as capable of controlling an opening amount with respect to the control port 52 by a lifting height from the control port 52 and a temperature correction member 54 connected to the valve disc 18 through a balancer spring 53 for correcting thermal variation of the opening amount caused by the thermal expansion or the thermal contraction in the axial direction in the cylindrical portion 49.

FIG 1

**Description**

Technical Field

The present invention relates to a governor apparatus used in a water heater, a boiler and so on.

Background Art

As a general structure of a governor apparatus using a back-pressure chamber control mechanism, the one described in the following Patent Document 1 is known. The apparatus regulates pressure at an outlet side by a main valve disc performing opening and closing operation with respect to a valve port communicating an inlet side of a flow path with the outlet side. Since the main valve disc is connected to a diaphragm delimiting the flow path and a back-pressure chamber, the opening and closing operation of the main valve disc is possible by regulating the pressure of the back-pressure chamber. On the other hand, a governor section arranged on the way of a branch flow path branching from the inlet side toward the back-pressure chamber includes a tubular portion whose both ends in the axial direction open, a port opening at one end side of the tubular portion, a valve seat formed at an opening edge of the port and a valve disc arranged by the valve seat being floated from the port for a prescribed height, which regulates the pressure of the back-pressure of the chamber.

Patent Document 1: JP-A-57-60416

Disclosure of the Invention

However, in the apparatus, the distance between the valve seat and the valve disc varies and an opening amount of the port varies by thermal expansion and thermal contraction in the axial direction in the tubular portion. Therefore, pressure in the back-pressure chamber varies and pressure at the outlet side also varies. The invention has been made based on the above circumstances, and an object thereof is to keep the opening amount constant with respect to temperature variation.

As a means for achieving the above object, the invention of claim 1 is characterized by comprising a tubular portion whose both ends in an axial direction open, a valve seat formed at an opening edge of a port opening at one end side of the tubular portion, a valve disc which is capable of closing the valve seat as well as capable of controlling an opening amount with respect to the port by a lifting height from the port, and a temperature correction member connected to at least either of the valve disc or the tubular portion directly or indirectly for correcting thermal variation of the opening amount caused by the thermal expansion or the thermal contraction in the axial direction in the tubular portion.

The invention of claim 2 according to claim 1 is characterized in that one end side of a spring biasing the valve disc in a direction opening the port is engaged with the valve disc, and the other end side of the spring is engaged with the temperature correction member which is capable of thermally expanding and contracting in the axis direction of the tubular portion.

The invention of claim 3 according to claim 1 or claim 2 is characterized in that the temperature correction member touches a member forming a heat transfer source for the tubular portion.

The invention of claim 4 according to claim 2 or claim 3 is characterized in that the temperature correction member includes a spring receiving portion supporting the other end side of the spring and plural leg portions extending along the axial direction from the spring receiving portion.

The invention of claim 5 according to any one of claim 1 to claim 4 is characterized in that the temperature correction member is made of polyacetal resin.

The invention of claim 6 according to any one of claim 1 to claim 5 is characterized by including a working governor section having a case body, a valve port communicating an inlet side with an outlet side of a flow path in the case body, a regulation valve opening and closing the valve port, a pressure detection chamber provided in the case, and a differential pressure operating member dividing the inside of the case body into the pressure detection chamber and the outlet side and allowing the regulation valve to perform opening and closing operation based on the pressure difference between the pressure detection chamber and the outlet side, a servo section having an air introducing chamber to which air of a constant pressure is introduced and a pressure regulation chamber divided from the air introducing chamber by the valve disc, and a body in which the working governor section and the servo section are incorporated, having a first communicating path communicating the inlet side with the port, a second communicating path communicating the outlet side with the pressure regulation chamber and a control flow path communicating the pressure detection chamber with the first communicating path, in which pressure in the pressure detection chamber is controlled by the opening amount.

Advantage of the Invention

[Invention of claim 1]
According to the invention of claim 1, the temperature correction member connected to at least either of the valve disc or the tubular portion directly or indirectly for correcting thermal variation of the opening amount caused by the thermal expansion or the thermal contraction in the axial direction in the tubular portion is included, therefore, the opening amount can be kept constant with respect to temperature variation.
[Invention of claim 2]
According to the invention of claim 2, one end side of the spring biasing the valve disc in a direction opening the port is engaged with the valve disc, and the other end side of the spring is engaged with the temperature correction member which is capable of thermally expanding and contracting in the axis direction of the tubular portion, therefore, the valve disc can be connected to the free end side of the spring, and the opening and closing operation of the valve disc can be performed moderately with respect to the thermal expansion and contraction of the temperature correction member.
[Invention of claim 3]
According to the invention of claim 3, the temperature correction member touches the member forming the heat transfer source of the tubularportion,temperature variation is transmitted to the tubular portion as well as transmitted to the temperature correction member, as a result, rapid and highly accurate correction becomes possible.
[Invention of claim 4]
According to the invention of claim 4, the temperature correction member includes the spring receiving portion supporting the other end side of the spring and the plural leg portions extending along the axial direction from the spring receiving portion, therefore, leg portions can is allowed to function as heat transfer portions.
[Invention of claim 5]
As material used for the servo device, a certain degree of heat resistance is required, however, when glass fiber is mixed into resin to increase the heat resistance, the elongation is reduced. Therefore, it can be conceivable that a dimension of the temperature correction member in the axial direction is elongated, however, there is a problem that the whole device will be large in size. At this point, according to the invention of claim 5, polyacetal resin is applied as the temperature correction member, therefore, the heat resistance can be secured without mixing glass fiber as well as it is not necessary to elongate the temperature correction member in the axial direction, thereby preventing the whole device from being large in size.
[Invention of claim 6]
In order to keep pressure at the outlet side constant, a method of regulating pressure at the outlet side by attaching the temperature correction member at the working governor section to make corrections can be considered. However, according to the method, even if the pressure at the outlet side can be temporarily regulated, the opening amount varies depending on pressure variation of the outlet side, as a result, the pressure at the outlet side have to be returned to the pressure before the regulation . According to the invention of claim 6, since the temperature correction member is attached to the servo section, it is possible to keep the opening amount constant, thereby keeping the pressure at the outlet side constant.

Brief Description of the Drawings

[Fig. 1] Fig. 1 is a cross-sectional view showing a governor apparatus according to Embodiment 1.
[Fig. 2] Fig. 2 is a cross-sectional view showing a servo section thereof.
[Fig. 3] Fig. 3 is a cross-sectional view of a cylindrical portion and a temperature correction member thereof.
[Fig. 4] Figs. 4 are a plan view, a longitudinal sectional view and a bottom view of the temperature correction member thereof.
[Fig. 5] Fig. 5 is a correlation chart showing relation between temperature variation and outlet-side pressure in the related prior art and the present invention.
[Fig. 6] Fig. 6 is a cross-sectional view of a servo section according to Embodiment 2.
[Fig. 7] Figs. 7 are a plan view and a longitudinal sectional view of the temperature correction member.

Description of Reference Numerals and Signs

1        governor apparatus
2        inlet side

| | | |
|---|---|---|
| 3 | outlet side | |
| 6 | first communicating path | |
| 7 | second communicating path | |
| 8 | control flow path | |
| 10 | servo section | |
| 16 | air introducing chamber | |
| 17 | pressure regulation chamber | |
| 18 | valve disc | |
| 20 | working governor section | |
| 21 | case body | |
| 22 | supply port (valve port) | |
| 25 | pressure detection chamber | |
| 26 | large-diameter diaphragm (differential pressure operating member) | |
| 29 | regulation valve | |
| 40 | body (member forming a heat transfer source) | |
| 49 | cylindrical portion (tubular portion) | |
| 50 | valve seat | |
| 52, 61 | control port (port) | |
| 53 | balancer spring | |
| 54, 62 | temperature correction member | |
| 54A | spring receiving portion | |
| 54B | leg portion | |
| 57 | cylindrical portion (tubular portion) | |
| 58 | valve seat | |
| R | flow path | |
| Q | opening amount of control port | |

Best Mode for Carrying Out the Invention

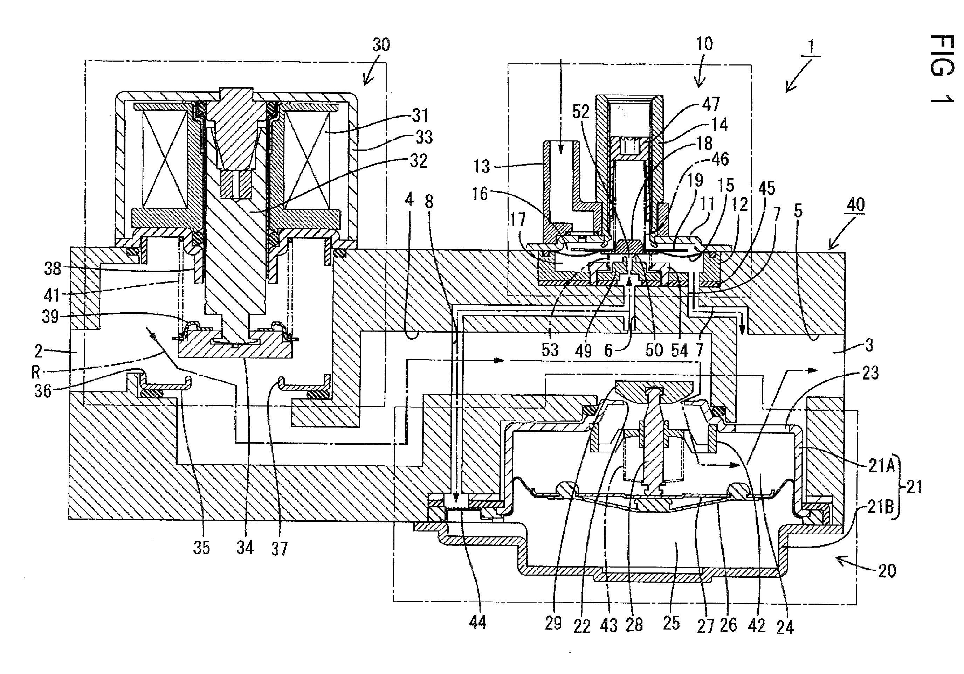

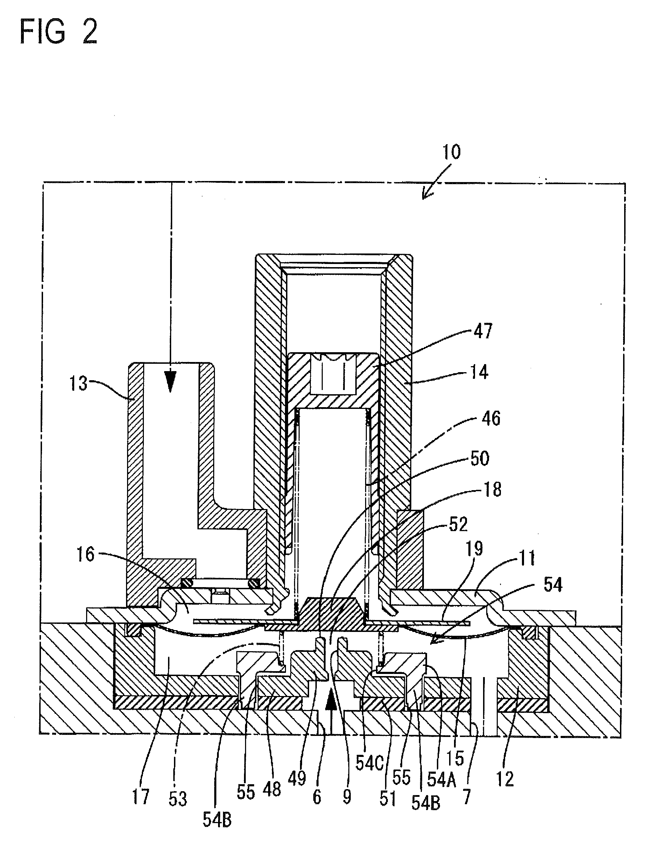

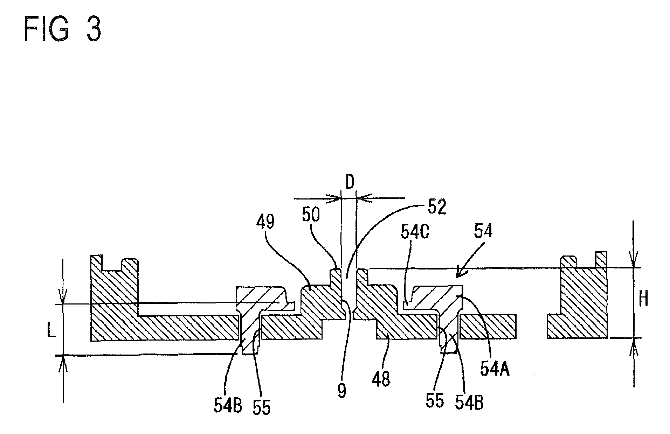

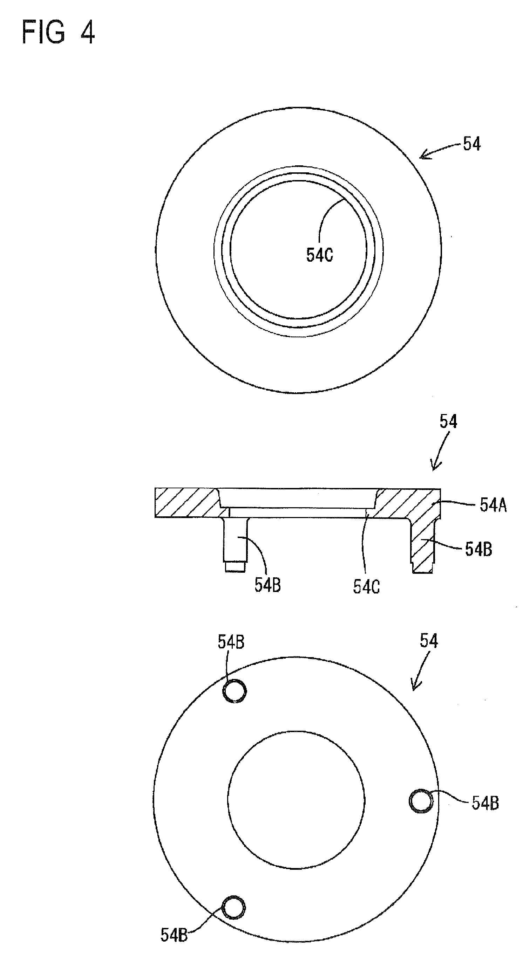

[Embodiment 1]
Embodiment 1 of the invention will be explained with reference to Fig. 1 to Fig. 5. A governor apparatus 1 in the embodiment is used for controlling air-fuel ratio by using a premix burner in a gas boiler as a hot-water supply heater. As shown in Fig. 1, the governor apparatus 1 includes a servo section 10, a working governor section 20, a solenoid valve 30 and a body 40. Inside the body 40, a flow path "R" communicating an inlet side 2 with an outlet side 3 is arranged. Fuel flowing in the flow path "R" flows in from the inlet side 2, passes through the solenoid 30, then, passes through the working governor section 20 through an lead-in path 4 communicating the solenoid valve 30 with the working governor 20, after that, flows out from the outlet side 3 through a lead-out path 5 connecting to the outlet side 3. Also inside the body 40, a first communicating path 6 communicating the lead-in path 4 with the servo section 10, a second communicating path 7 communicating the servo section 10 with the lead-out path 5 and a control flow path 8 communicating a later-described pressure detection chamber 25 with the first communicating path 6 are formed.

The solenoid valve 30 is provided for opening or closing the flow of fuel from the inlet side 2 by distributing power or not distributing power to a coil section 31, and a plunger 32 is disposed at the center of the coil section 31 so as to move vertically along the axis. A yoke 33 is fitted at an outer periphery of the coil section 31, forming a part of a magnetic circuit relating to excitation to the coil section 31. A lower end of the plunger 32 protrudes downward from a lower surface of the yoke 33, and a valve member 34 is fixed at the lower end of the plunger 32. A seat body 35 is arranged under the yoke 33 and the plunger 32 is plunged thereinto. At a side surface of the seat body 35, an in-side opening 36 connecting to the inlet side 2 of the body 40 is formed, and an out-side opening 37 connecting to the lead-in path 4 is formed at an lower surface thereof. A cylindrical portion 38 is formed at the center of the lower surface of the yoke 33 so as to open downward to allow the plunger 32 to move up and down, and a return spring 41 is interposed between a spring receiving portion 39 installed on an upper surface of the valve member 34 and the lower surface of the yoke 33, which operates the valve member 34 so as to close the out-side opening 37. That is, the plunger 32 moves upward against biasing force of the return spring 41 due to excitation by the power distribution to the coil section 31 to open the out-side opening 37, and at the time of not-excited state without power distribution, the return spring 41 biases the valve member 34 so as to close the out-side opening 37.

The working governor section 20 includes a hollow case body 21 having an upper cover 21A and a lower cover 21B. A supply port (corresponding to a valve port of the invention) 22 communicating the lead-in path 4 with the inside of the base body 21 and a discharge port 23 communicating the lead-out path 5 with the inside of the case body 21 are opened at the upper cover 21A. In the case body 21, a large-diameter diaphragm (corresponding to a differential pressure operatingmember) 26 dividing the inside of the case body 21 into an upper chamber 24 and a lower chamber (hereinafter, referred to as the pressure detection chamber) 25 is incorporated. The large-diameter diaphragm 26 includes a circular thin-film plate made of rubber material having good flexibility, and an outer periphery edge thereof is sandwiched by the upper cover 21A and the lower cover 21B through a relaxing portion. The large-diameter diaphragm 26 can be displaced in up-and-down directions due to the relaxing portion. A circular large-diameter reinforcing plate 27 is fixed at an upper surface of the center of the large-diameter diaphragm 26. In addition, a shaft 28 is provided to stand upward at the center of the large-diameter diaphragm 26. A regulation valve 29 opening and closing the supply port 22 is fixed at an upper end of the shaft 28. Further, a guide member 42 is fixed at the upper cover 21A below the supply port 22. At the center of the guide member 42, a cylindrical guide tube extending in up-and-down directions is provided to allow the shaft 28 to be inserted so as to be able to slide therethrough. A return spring 43 is interposed between the shaft 28 and the guide member 42, biasing the regulation valve 29 in the direction closing the supply port 22. A fixed orifice 44 is arranged at a place communicating with the control flow path 8 in the case body 21.

The servo section 10 has a fluid inflow space including an upper surface plate 11 made of metal and a base portion 12 made of polyphenylene sulfide (including glass fiver), and an air introducing tube 13 connected to an air supply path for combustion air and a spring housing tube 14 are attached on the upper plate 11. A rubber packing 51 is arranged between a bottom surface portion 48 of the base portion 12 and the body 40. The fluid flow space is divided into an air introducing chamber 16 of the upper surface plate 11 side and a pressure regulation chamber 17 of the base portion 12 side by a small-diameter diaphragm 15. An inner wall of the base portion 12 and the rubber packing 51 are pierced coaxially in the direction of an outer peripheral portion in the bottom surface portion 48 of the base portion 12, which allows the connection to the second communicating path 7. Therefore, the pressure regulation chamber 17 communicates with the outlet side 3 through the second communicating path 7 and the lead-out path 5 so as to be the same pressure as pressure of the outlet side 3.

The small-diameter diaphragm 15 includes a toroidal thin-film plate made of rubber material having good flexibility, and an outer peripheral edge thereof is sandwiched by the upper surface plate 11 and the base portion 12 through a relaxing portion. The small-diameter diaphragm can be displaced in up-and-down directions due to the relaxing portion. At the center of the small-diameter diaphragm 15, a valve disc 18 is provided integrally with the small-diameter diaphragm 15. An upper surface of the valve disc 18 is formed to be a boss-shape and a lower surface thereof is formed to be flat. A circular small-diameter reinforcing plate 19 having prescribed stiffness is fitted to the valve disc 18 from above. An end of an adjustment spring 46 is fitted to the upper surface of the valve disc 18, and the other end thereof abuts on a spring-force adjustment member 47 screwed in the spring housing tube 14, therefore, biasing force in the direction depressing the small-diaphragm 15 can be adjusted by adjusting a screwing amount thereof.

In the bottom surface portion 48 of the base portion 12, a cylindrical portion 49 protrudes upward at a position corresponding to the center of the lower surface of the valve disc 18. A vertical path 9 is formed along an axis inside the bottom surface portion 48 and the cylindrical portion 49, and an upper end thereof opens as a control port (correspond to a port of the invention) 52. A valve seat portion 50 is provided protruding upward coaxially with the cylindrical portion 49 on the center of the upper surface of the cylindrical portion 49, and an upper end surface of the valve seat portion 50 is a valve seat for the valve disc 18. In addition, the vertical path 9 pierces through the rubber packing 51 coaxially with the vertical path 9, thereby communicating with the first communicating path 6. Therefore, the pressure adjustment chamber 17 communicates with the lead-in path 4 through the first communicating path 6 and the vertical path 9, and further, communicates with the pressure detection chamber 25 through the control flow path 8.

At the lower surface side of the small-diaphragm 15, a balancer spring (corresponding to a spring of the invention) 53 is arranged coaxially with the adjustment spring 46. In the embodiment, spring force of the balancer spring 53 is set to be larger than the force of the adjustment spring 46. However, the difference of the spring force is set so as to approximately correspond to empty weights of the valve disc 18, the small-diameter diaphragm 15 and the small-diameter reinforcing plate 19. Therefore, up-and-down movement of the small diameter diaphragm 15 only depends on the pressure difference between pressure of the air introducing chamber 16 and the pressure of the pressure adjustment chamber 17 (pressure of the outlet side 3). In the steady state in which pressure at the outlet 3 is constant, the pressure difference between the air introducing chamber 16 and the pressure adjustment chamber 17 balances with the difference between the spring force of the adjustment spring 46 and the spring force of the balancer spring 53, and the valve disc 18 is floated from the valve seat 50 for a prescribed height A1 so as to be in proportion with the pressure difference at the time to keep a prescribed opening amount Q1. Further, the pressure in the pressure detection chamber 25 is set to a prescribed pressure P1 in accordance with the prescribed opening amount Q1.

A temperature correction member 54 including an approximately toroidal spring receiving portion 54A and plural leg portions 54B (three, when shown in the drawing) extending downward from the spring receiving portion 54A along the axis direction is fitted at a position surrounding the outer peripheral surface of the cylindrical portion 49. The temperature correction member 54 is made of resin and a flange 54C projecting inward is formed along the circumferential direction at a lower end of a hole wall of an eyehole of the spring receiving portion 54A, and a lower end of the balancer spring 53 is supported there. Piercing holes 55 are respectively provided at positions corresponding to the leg portions 54B in the bottom surface portion 48 of the base portion 12, and the leg portion 54B can be inserted thereinto. In the temperature correction member 54, the height dimension of the leg portions 54B is set so as to directly touch the body (corresponding to a member forming a heat transfer source of the invention) 40 at the lower end of the log portions 54B. Though a polyacetal (linear expansion coefficient C=0.0001/K) resin is applied as a resin material in the embodiment, it is possible suitably to select the res in material to be used according to product types or applications.

When the cylindrical portion 49 is thermally expanded with increase of temperature under a state in which pressure in the inlet side 2 is constant, a height dimension H from the lower surface of the bottom surface portion 48 of the base portion 12 to the valve seat 50 is elongated. As a result, a clearance between the valve disc 18 and the valve seat 50 will be small and the opening amount will be reduced, whereas an aperture diameter D will be elongated and the opening amount will be increased. However, in the embodiment, the height dimension H is set to be sufficiently longer than the aperture diameter D, therefore, the thermally-expanded height of the height dimension H contributes only to the opening amount Q in actual fact. As a result, when heat is added to the cylindrical portion 49, the opening amount will be reduced to be an opening amount Q2 (Q2<Q1) . In the opening amount Q2, pressure in the pressure detection chamber 25 increases and the opening amount of the supply port 22 increases, and pressure in the outlet side 3 increases to be a pressure P2 (P2>P1). Therefore, in order to keep the pressure of the outlet side 3 constant, it is necessary to make a correction by allowing the height position of the valve disc 18 to move upward for the height variation ΔH which is generated by the height position of the valve seat 50 moving upward and coming close to the valve disc 18 by the thermal expansion of the cylindrical portion 49. Concerning a length variation ΔL of a length dimension L from the lower surface of the leg portions 54B to the upper surface of the flange 54C caused by a temperature variation ΔT of the temperature correction member 54,

the following relation expression will be proved.

$$\Delta L = \text{temperature variation } \Delta T \times \text{linear expansion coefficient } C \times \text{length dimension } L \ldots \ldots (1)$$

Concerning the relation between ΔH and ΔL, when a spring constant of the adjustment spring 46 is K1 and a spring constant of the balancer spring 53 is K2, a force F1 received by the valve disc 18 from the adjustment spring 46 due to the movement of the height position of the valve disc 18 to the upper position for ΔH will be

$$F1 = K1 \times (\Delta H),$$

whereas, a force F2 received by the valve disc 18 from the balancer spring 53 will be

$$F2 = K2 \times (\Delta L - \Delta H).$$

According to (F1=F2) in which these forces F1 and F2 balance,

$$K1 \times \Delta H = K2 \times (\Delta L - \Delta H)$$

$$\rightarrow \Delta L = \{(K1 + K2)/K2\} \times \Delta H \ldots \ldots (2)$$

According to the above relation expression, a value ΔL is fixed, therefore, the length dimension L and material of the temperature correction member 54 (linear expansion coefficient C) will be selected by substituting the ΔL into the expression (1) .

Particularly in the embodiment, polyacetal resin is used and it is possible to obtain necessary heat resistance even when glass fiber is not mixed, therefore, elongation (linear expansion coefficient C) is not reduced. As a result, it is possible to prevent the whole apparatus from being large in size by reducing the length dimension L. Though the case in which the cylindrical portion 49 is thermally expanded with the increase of temperature has been explained as an example as the above, a case in which the cylindrical portion 49 is thermally contracted with the decrease of temperature is the same as the above, therefore, the explanation thereof is omitted.

The structure of the embodiment is as described above and subsequently, operation thereof will be explained.

First, a state until reaching the steady state in which fuel supply pressure becomes constant by operating the governor apparatus 1 will be explained.

When the governor apparatus 1 is operated, the plunger 32 moves upward against biasing force of the return spring 41 by excitation caused by power distribution to the coil section 31 of the solenoid valve 30 to open the out-side opening 36. In this state, when fuel is fed into the flow path "R" from the inlet side 2 by a not-shown supply pipe (pipeline) in the case of city gas, and by a not-shown gas container in the case of propane gas, the fuel reaches inside the lead-in path 4 via the in-side opening 36 and the out-side opening 37 of the shutoff valve 30. On the other hand, air is fed into the air introducing chamber 16 through the air introducing tube 13.

At the time of starting operation, the regulation valve 29 is in a state of closing the supply port 22, and the fuel is fed into the pressure detection chamber 25 passing through the first communicating path 6 and the control flow path 8. Then, pressure in the pressure detection chamber 25 increases as compared with the upper chamber 24, therefore, the large-diameter diaphragm 26 is pushed up, and the regulation value 29 starts to open the supply port 22. Accordingly, the fuel flows from the supply port 22 to the upper chamber 24, passing through the discharge port 23 to flow into the lead-out path 5. When pressure of the outlet side 3 is generated, the outlet pressure is led from the communicating path 7 to the pressure regulation chamber 17. Then, the small-diameter diaphragm 15 pushes up the valve disc 18, receiving the pressure of the pressure introducing chamber 17. On the other hand, when the opening of the regulation valve 29 becomes large with the pressure increase in the pressure detection chamber 25, the pressure of the outlet side 3 also gradually increases. Accordingly, the pressure of the pressure regulation chamber 17 increases following the above, the valve disc 18 is further pushed up and the control port 52 is gradually opened. As the opening amount of the control port 52 increases, the rising of pressure in the pressure detection chamber 25 gradually moderates, and the rising of pressure in the pressure regulation chamber 17 also moderates to balance at pressure in accordance with the air introducing chamber 16, then, the position of the valve disc 18 becomes steady and the opening amount of the control port 52 also becomes steady at the prescribed opening amount Q1. As a result, the pressure in the pressure detection chamber 25 becomes steady, the large-diameter diaphragm 26 is steady at a position where pressure in the pressure detection chamber 25 balances with pressure in the upper chamber 24, and the opening amount of the supply port 22 becomes steady, accordingly, the pressure in the outlet side 3 becomes steady at P1 (steady state) .

Next, the case in which the height dimension "H" in the cylindrical portion 49 varies by temperature variation will be explained. Though the case in which temperature increases is explained here, the case in which temperature decreases is in the same manner, therefore, the explanation thereof is omitted.

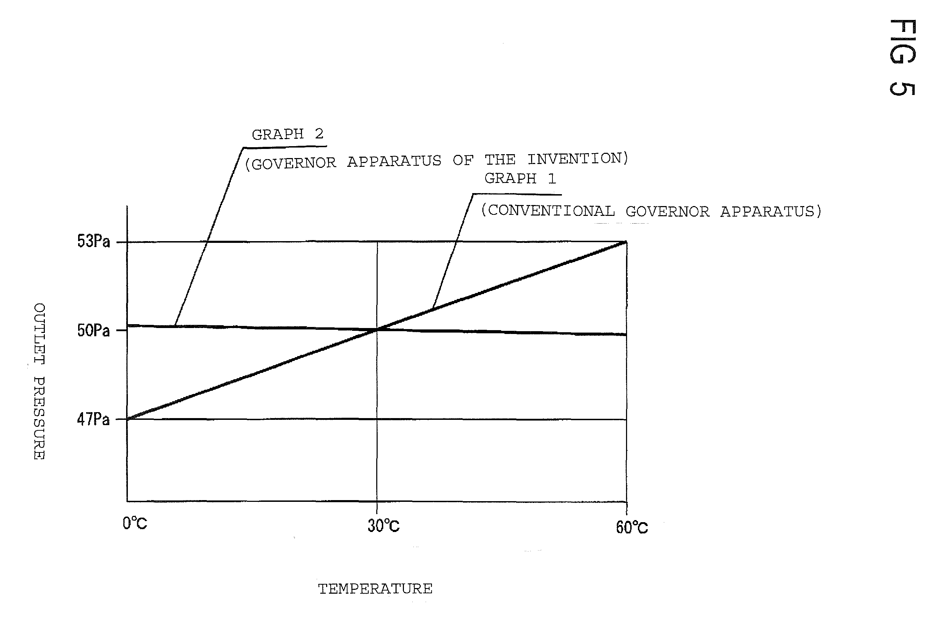

When the cylindrical portion 49 is thermally expanded with the temperature increase and the height dimension "H" becomes high for the height ΔH, the valve seat 50 comes close to the valve disc 18 for ΔH. In the case in which the temperature correction member 54 is not used, the clearance between the valve disc 18 and valve seat 50 is shortened for ΔH, therefore, the opening amount of the control port 52 becomes small to be the opening amount Q2 (Q2<Q1). Then, the amount of fuel fed to the pressure detection chamber 25 through the control flow path 8 increases and pressure in the pressure detection chamber 25 increases, then, the large-diameter diaphragm 26 moves upward based on the pressure difference between the pressure detection chamber 25 and the upper chamber 24. Accordingly, the regulation valve 29 moves upward to increase the opening amount of the supply port 22 as well as pressure of the outlet side 3 increases to be the pressure P2 (refer to a graph 1 in Fig. 5). However, in the embodiment, the temperature regulation member 54 is interposed between the balancer spring 53 and the body 40, and the lower end of the balancer spring 53 is supported by the flange 54C. Therefore, the temperature correction member 54 is thermally expanded with the temperature increase, the length dimension L is elongated for ΔL and the whole balancer spring 53 is moved upward for ΔL. Since the material, the length dimension L and the like of the temperature correction member 54 are set so that ΔL becomes equal to ΔH, the valve disc 18 is kept at the position where the valve disc 18 is floated from the valve seat 50 for the prescribed height A1, and the opening amount of the control port 52 is kept at the prescribed opening amount Q1. Accordingly, pressure in the outlet side 3 is kept at a constant pressure with respect to the temperature increase (refer to graph 2 in Fig. 5). In the embodiment, since the leg portions 54B of the temperature correction member 54 touch the surface of the body 40, for example, when the temperature at the surface of the body 40 varies due to heat generation of the coil section 31, the temperature variation can be rapidly transmitted to the temperature correction member 54.

As described above, in the embodiment, since the temperature correction member 54 which is connected to the valve disc 18 through the balancer spring 53 for correcting thermal variation of the opening amount due to the thermal expansion or thermal contraction of the cylindrical portion 49 in the axial direction is provided, the opening amount can be kept constant with respect to the temperature variation. In addition, one end side of the balancer spring 53 which biases the valve disc 18 in the direction opening the control port 52 is engaged with the valve disc 18, and the other end side of the balancer spring 53 is engaged with the temperature correction member 54 which can thermally expand and contract in the axis direction of the cylindrical portion 49, therefore, the valve disc 18 can be connected to the free end side of the balancer spring 53, which allows opening and closing operation of the valve disc 18 to be performed smoothly. Further, since the temperature correction member 54 touches the member (body 40) forming the heat transfer source of the cylindrical portion 49, temperature variation is rapidly transmitted to the temperature correction member 54, which enables correction with high accuracy. Moreover, since the temperature correction member 54 includes the spring receiving portion 54A supporting the other end side of the balancer spring 53 and the plural leg portions 54B extending from the spring receiving portion 54A along the axial direction, the leg portions 54B are allowed to function as heat transfer portions. Also, since the polyacetal resin is applied as the temperature correction member 54, it is possible to secure heat resistance without mixing glass fiber. Since the glass fiber is not mixed, the elongation is not reduced, which prevents the temperature correction member 54 from becoming large in size in the axial direction.

[Embodiment 2]

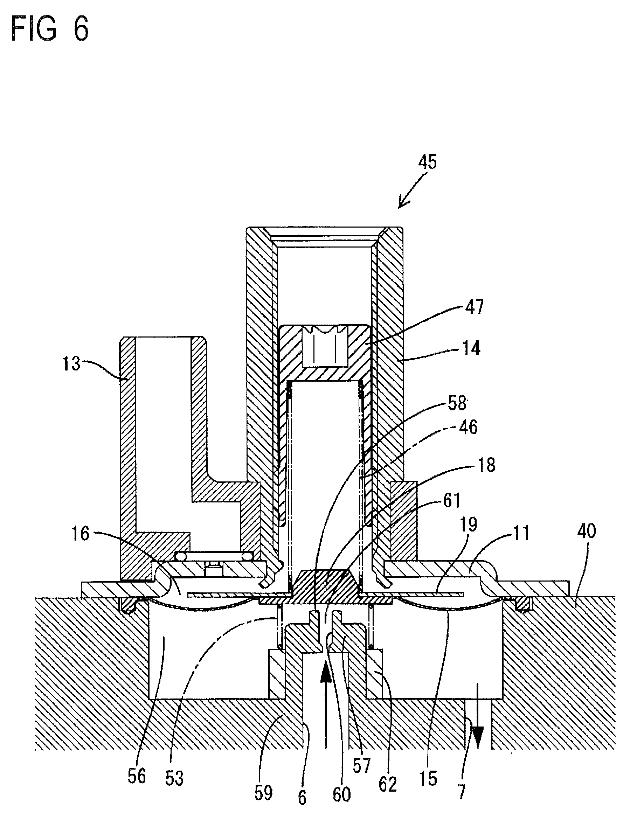

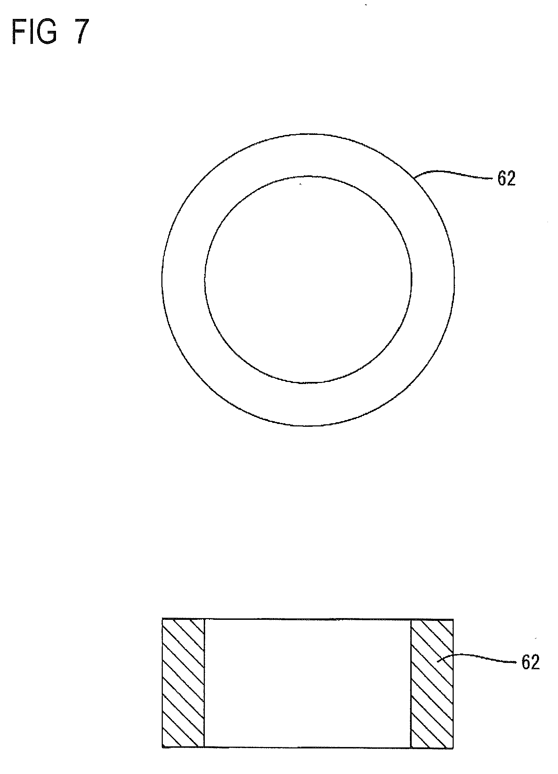

Next, Embodiment 2 of the invention will be explained with reference to Fig. 6 to Fig. 7. The governor apparatus 1 of the embodiment is the one in which the structure of the servo section 10 of Embodiment 1 is partially changed, and explanation about other overlapping structures thereof is omitted. A servo section 45 of the embodiment is provided with a pressure regulation chamber 56 in the body 40, which is divided from the air introducing chamber 16 by the small-diameter diaphragm 15. In a bottom surface portion 59 of the body 40, a cylindrical portion 57 (corresponding to a tubular portion of the invention) protrudes upward at a position corresponding to the center of a lower surface of a valve disc 46. A valve seat 58 is provided protruding upward coaxially with the cylindrical portion 57 at the center of an upper surface of the cylindrical portion 57, and an upper end surface of the valve seat portion 58 is a valve seat for the valve disc 46. A vertical path 60 is formed along the axis inside the bottom surface portion 59 and the cylindrical portion 57, and an upper end thereof opens as a control port 61, whereas a lower end is communicated with the first communicating path 6. A cylindrical temperature correction member 62 is fitted to an outer peripheral surface of the cylindrical portion 57 in a state of touching along a circumferential direction. A lower end of the temperature correction member 62 is supported by the bottom surface portion 59 as well as an upper end of the temperature correction member 62 supports a lower end of the balancer spring 53.

According to the governor apparatus 1 of the invention, an inner peripheral surface of the temperature correction member 62 touches the outer peripheral surface of the cylindrical portion 57 over the whole surface, and temperature variation of the cylindrical portion 57 is directly transmitted, therefore, almost at the same time when the cylindrical portion 57 expands or contracts, the temperature correction member 62 can expand or contract to make corrections. In addition, since the structure the temperature correction member 62 is simplified as compared with the temperature correction member 57 of Embodiment 1, it can be manufactured more easily and at lower costs. Moreover, the temperature correction member 62 is installed in the pressure regulation chamber 56, and it is not necessary that the leg portions 54B are allowed to touch the body 40 through the piercing holes 55 as in Embodiment 1, which enables only the servo section 45 to be dealt with as a single item of a small actuator.

[Other Embodiments]

The invention is not limited to the embodiments explained by the above description and the drawings, and for example, the following embodiments are included in the technical range of the invention, and further, the invention can be achieved by being variously modified within a range not departing from the gist, not limited to the following embodiments.

1. In the embodiment, the temperature correction member is explained as the example, which is interposed between the lower end of the balancer spring 53 and the body 40, however, according to the invention, it is preferable that the prescribed opening amount Q1 is kept by floating the valve disc 18 for the prescribed height A1 by moving the valve disc 18 by the temperature correction member, and for example, it is also preferable that the temperature correction member is interposed between the upper end of the balancer spring 53 and the lower surface of the valve disc 18.

2. In the embodiment, the temperature correction member made of resin is explained as the example, however, according to the invention, it is not always necessary that it is made of resin, and also preferable to be made of metal material having a certain linear expansion coefficient.

3. In the embodiment, the correction is made by adjusting the height position of the valve disc 18 as the example, however, according to the invention, it is preferable that the correction is made by adjusting the height position of the valve seat 50. In short, it is preferable that the prescribed opening amount Q1 can be kept by floating the valve disc 18 from the valve seat for the prescribed height A1, and a position of attaching the temperature correction member does not matter.

4. In the case of the governor apparatus in which the pressure at the outlet side is kept constant by controlling the opening and closing operation of the working governor section by the servo section as in the embodiment, it is necessary to provide the temperature correction member in the servo section, however, according to the invention, in the case of a governor apparatus only including the working governor section, not including the servo section, it is also possible to keep the pressure at the outlet side constant by providing the temperature correction member at the working governor section.

5. In Embodiment 1, the leg portions 54B are integrally formed with the temperature correction member 54 as the example, however, according to the invention, it is not always necessary that they are integrally formed as long as they can transmit heat, for example, it is also preferable that the spring receiving portion 54A and the leg portions 54B can use different materials.

6. In the embodiment, explanation concerning hardness variation of the diaphragm according to temperature variation is omitted, however, it is preferable to perform material selection and product design in consideration of the hardness variation of the diaphragm in order to perform temperature correction more precisely. In this case, it is preferable to set the linear expansion coefficient C and the length dimension L so as to obtain $\Delta L$ corresponding to spring load after spring load variation necessary for the pressure variation to be corrected is led by an experiment and the like.

**Claims**

1. A governor apparatus, comprising:

   a tubular portion whose both ends are in an axial direction open;
   a valve seat formed at an opening edge of a port opening at one end side of the tubular portion;
   a valve disc which is capable of closing the valve seat as well as capable of controlling an opening amount with respect to the port by a lifting height from the port; and
   a temperature correction member connected to at least either of the valve disc or the tubular portion directly or indirectly for correcting thermal variation of the opening amount caused by the thermal expansion or the thermal contraction in the axial direction in the tubular portion.

2. The governor apparatus according to claim 1,
   wherein one end side of a spring biasing the valve disc in a direction opening the port is engaged with the valve disc, and the other end side of the spring is engaged with the temperature correction member which is capable of thermally expanding and contracting in the axis direction of the tubular portion.

3. The governor apparatus according to claim 1 or 2,
   wherein the temperature correction member touches a member forming a heat transfer source for the tubular portion.

4. The governor apparatus according to claim 2 or 3,
   wherein the temperature correction member includes a spring receiving portion supporting the other end side of the spring and plural leg portions extending along the axial direction from the spring receiving portion.

5. The governor apparatus according to any one of claims 1 to 4,
   wherein the temperature correction member is made of polyacetal resin.

6. The governor apparatus according to any one of claims 1 to 5, comprising:

   a working governor section having a case body, a valve port communicating an inlet side with an outlet side of a flow path in the case body, a regulation valve opening and closing the valve port, a pressure detection chamber provided in the case, and a differential pressure operating member dividing the inside of the case body into the pressure detection chamber and the outlet side and allowing the regulation valve to perform opening and closing operation based on the pressure difference between the pressure detection chamber and the outlet side;
   a servo section having an air introducing chamber to which air of a constant pressure is introduced and a pressure regulation chamber divided from the air introducing chamber by the valve disc; and
   a body in which the working governor section and the servo section are incorporated, having a first communicating path communicating the inlet side with the port, a second communicating path communicating the outlet side with the pressure regulation chamber and a control flow path communicating the pressure detection chamber with the first communicating path, and

   wherein pressure in the pressure detection chamber is controlled by the opening amount.

FIG 1

## FIG 2

FIG 3

# FIG 4

54

54C

54

54A

54B

54B    54C

54B

54B

54B

54

FIG 5

FIG 6

FIG 7

62

62

**INTERNATIONAL SEARCH REPORT**

International application No.

PCT/JP2006/323904

| A. CLASSIFICATION OF SUBJECT MATTER |
|---|
| *G05D16/06*(2006.01)i, *F23N1/00*(2006.01)i |
| According to International Patent Classification (IPC) or to both national classification and IPC |

| B. FIELDS SEARCHED |
|---|
| Minimum documentation searched (classification system followed by classification symbols)<br>G05D16/06, F23N1/00 |
| Documentation searched other than minimum documentation to the extent that such documents are included in the fields searched<br>Jitsuyo Shinan Koho    1922-1996   Jitsuyo Shinan Toroku Koho  1996-2007<br>Kokai Jitsuyo Shinan Koho  1971-2007   Toroku Jitsuyo Shinan Koho  1994-2007 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | Microfilm of the specification and drawings annexed to the request of Japanese Utility Model Application No. 97914/1982(Laid-open No. 4020/1984)<br>(Shimadzu Corp.),<br>11 January, 1984 (11.01.84),<br>Full text; all drawings<br>(Family: none) | 1-6 |
| A | JP 2001-92535 A  (Nippon Carburetor Co., Ltd.),<br>06 April, 2001 (06.04.01),<br>Full text; all drawings<br>(Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>01 February, 2007 (01.02.07) | Date of mailing of the international search report<br>13 February, 2007 (13.02.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| | International application No. |
|---|---|
| | PCT/JP2006/323904 |

C (Continuation).   DOCUMENTS CONSIDERED TO BE RELEVANT

| Category* | Citation of document, with indication, where appropriate, of the relevant passages | Relevant to claim No. |
|---|---|---|
| A | CD-ROM of the specification and drawings annexed to the request of Japanese Utility Model Application No. 13475/1993 (Laid-open No. 75010/1994) (Yokogawa Electric Corp.), 21 October, 1994 (21.10.94), Full text; all drawings (Family: none) | 1-6 |
| A | JP 53-146320 A  (Hitachi, Ltd.), 20 December, 1978 (20.12.78), Full text; all drawings (Family: none) | 1-6 |

Form PCT/ISA/210 (continuation of second sheet) (April 2005)

**EP 1 959 326 A1**

## REFERENCES CITED IN THE DESCRIPTION

**Patent documents cited in the description**

- JP 57060416 A